# EUROPEAN PATENT APPLICATION

(11) **EP 4 845 043 A1**
(43) Date of publication of application: **25.11.2026**
(21) Application number: 25751268.1
(22) Date of filing: 23.01.2025
(51) Int. Cl.: H04B 7/0456

(54) **METHOD FOR DETERMINING PRE-CODES, AND RELATED DEVICE**

(30) Priority: 07.02.2024 CN 202410174359
(71) Applicant: Huawei Technologies Co., Ltd., Shenzhen, Guangdong 518129 (CN)
(72) Inventor: ZHU, Yue, Shenzhen, Guangdong 518129 (CN); GAO, Junhui, Shenzhen, Guangdong 518129 (CN); YUAN, Yiling, Shenzhen, Guangdong 518129 (CN); WANG, Xiaohan, Shenzhen, Guangdong 518129 (CN)
(74) Representative: Huawei European IPR
(86) International application number: PCT/CN2025/074144
(87) International publication number: WO 2025/167666

(57) **Abstract**

This application provides a precoding determining method and a related device. The method includes: determining a first weight matrix based on a downlink reference signal and first information, where a downlink channel includes channels corresponding to m₁ port groups, the first information indicates a total quantity m₂ of antenna ports included in each port group, and/or the first information indicates a quantity of antenna ports in a first dimension and a quantity of antenna ports in a second dimension in each port group, and the first weight matrix is used to determine precoding corresponding to m₁*m₂ antenna ports; and sending first indication information, where the first indication information indicates the first weight matrix. In the method, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group, thereby reducing calculation complexity of generating the precoding, and reducing indication overhead.

## Description

This application claims priority to Chinese Patent Application No. 202410174359.4, filed with the China National Intellectual Property Administration on February 7, 2024 and entitled "PRECODING DETERMINING METHOD AND RELATED DEVICE", which is incorporated herein by reference in its entirety.

### TECHNICAL FIELD

This application relates to the communication field, and more specifically, to a precoding determining method, a communication apparatus, a computer-readable storage medium, a chip, and a computer program product.

### BACKGROUND

In a 5th generation (5th generation, 5G) mobile communication technology, application of massive (massive) multiple-input multiple-output (multiple input multiple output, MIMO) antenna technologies plays an important role in improving spectral efficiency of a communication system. When the MIMO antenna technology is used, a network device needs to precode data before sending the data to a terminal device. In a frequency division duplex (frequency division duplex, FDD) system, the terminal device performs measurement based on a reference signal sent by the network device, to determine a feedback amount of channel state information (channel state information, CSI), and the network device sends the data based on the CSI fed back by the terminal device. The network device determines, based on a precoding matrix indicator (precoding matrix indicator, PMI) fed back by the terminal device, precoding for transmitting the data to the terminal device. In a time division duplex (time division duplex, TDD) system, because an uplink channel and a downlink channel use a same frequency band, reciprocity exists. The network device may obtain CSI of the downlink channel based on the channel reciprocity by using the uplink channel, to further perform precoding. However, in some cases, for example, for a terminal device at a cell edge, because a channel condition is poor, an estimation error of the uplink channel obtained by the network device side is large. In this case, it may also be considered that precoding is determined based on channel state information fed back by the terminal device. As a quantity of antenna ports of the network device increases, CSI measurement for more ports can provide higher downlink spectral efficiency and a higher system capacity. Existing precoding supports a small quantity of antenna ports, and calculation complexity of the precoding increases continuously as a quantity of antenna ports increases, which leads to an increase in calculation complexity and an increase in indication overhead of the precoding.

Therefore, when there are a large quantity of antenna ports, how to reduce calculation complexity of generating precoding and reduce indication overhead of the precoding becomes a problem to be urgently resolved.

### SUMMARY

This application provides a precoding determining method, a communication apparatus, a computer-readable storage medium, a chip, and a computer program product, to reduce calculation complexity of generating precoding and reduce indication overhead of the precoding when there are a large quantity of antenna ports.

According to a first aspect, a precoding determining method is provided. The method includes: determining a first weight matrix based on a downlink reference signal and first information, where the downlink reference signal is used to obtain channel information of a downlink channel, the downlink channel includes channels corresponding to m₁ port groups, the first information indicates a total quantity m₂ of antenna ports included in each of the m₁ port groups, and/or the first information indicates a quantity n₁ of antenna ports in a first dimension and a quantity n₂ of antenna ports in a second dimension in each of the m₁ port groups, the first weight matrix corresponds to one of the m₁ port groups, the first weight matrix is used to determine precoding corresponding to m₁*m₂ antenna ports, m₂ is determined based on n₁ and n₂, m₁ and m₂ are integers greater than 1, and n₁ and n₂ are positive integers; and sending first indication information, where the first indication information indicates the first weight matrix.

In embodiments of this application, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group. In the method, the precoding corresponding to the m₁*m₂ antenna ports does not need to be directly calculated, so that calculation complexity of generating the precoding can be reduced, and indication overhead can be reduced.

With reference to the first aspect, in some implementations of the first aspect, second indication information is received, where the second indication information indicates the first information.

In embodiments of this application, the first information may be predefined, or the first information may be configured by a network device. When the first information is configured by the network device, the network device may determine an appropriate port group size and/or port group structure based on a quantity of antenna ports included in a downlink channel in an actual application scenario, to properly reduce the calculation complexity of the precoding and reduce the indication overhead.

With reference to the first aspect, in some implementations of the first aspect, the second indication information includes the first information, or the second indication information indicates an index of the first information in a first set. The first set includes at least one value or at least one value combination, and each of the at least one value combination includes two values. The total quantity m₂ of antenna ports that are included in each port group and that is indicated by the first information belongs to the at least one value, and/or the quantity of antenna ports in the first dimension and the quantity of antenna ports in the second dimension in each port group that are indicated by the first information belong to the at least one value combination.

In embodiments of this application, the second indication information may directly include the first information, or the second indication information indicates the index of the first information. When the second indication information directly includes the first information, the network device or a terminal device does not need to store the first set, so that occupation of large storage space can be avoided. When the second indication information indicates the index of the first information, one index may indicate a plurality of values, so that the indication overhead can be reduced.

With reference to the first aspect, in some implementations of the first aspect, when a quantity N₁ of antenna ports in the first dimension in the m₁*m₂ antenna ports varies, and/or a quantity N₂ of antenna ports in the second dimension in the m₁*m₂ antenna ports varies, one or more values included in a corresponding first set are different from one or more values included in a corresponding first set. Alternatively, when a quantity N₁ of antenna ports in the first dimension in the m₁*m₂ antenna ports varies, and/or a quantity N₂ of antenna ports in the second dimension in the m₁*m₂ antenna ports varies, each value included in a corresponding first set is the same as each value included in a corresponding first set. N₁*N₂=m₁*n₁*n₂.

In embodiments of this application, different values of N₁ may correspond to different first sets and/or different values of N₂ may correspond to different first sets, or different values of N₁ may correspond to a same first set and/or different values of N₂ may correspond to a same first set. When different values of N₁ correspond to different first sets and/or different values of N₂ correspond to different first sets, a value of m₂, n₁, or n₂ may be flexibly determined based on an actual value of N₁ and/or an actual value of N₂, so that a size and/or a structure of each port group are/is properly determined based on a quantity of antenna ports and/or a structure of an antenna port that are/is included in the downlink channel in an actual application scenario, thereby properly reducing the calculation complexity of the precoding. When different values of N₁ correspond to the same first set and/or different values of N₂ correspond to the same first set, the network device and/or the terminal device do/does not need to store a first set corresponding to each value of N₁ and/or a first set corresponding to each value of N₂, to avoid occupation of large storage space of the network device and/or the terminal device.

With reference to the first aspect, in some implementations of the first aspect, the first set includes the at least one value combination, and a product of two values in a first value combination in the at least one value combination is the quantity m₂ of antenna ports included in each port group.

With reference to the first aspect, in some implementations of the first aspect, the second indication information further indicates second information, and the second information indicates the quantity N₁ of antenna ports in the first dimension and the quantity N₂ of antenna ports in the second dimension in the m₁*m₂ antenna ports.

In embodiments of this application, the second information and the first information may be indicated by using same indication information, or the second information and the first information may be indicated by using different indication information. When the second information and the first information are indicated by using the same indication information, the indication overhead can be reduced.

With reference to the first aspect, in some implementations of the first aspect, a first matrix is determined based on the downlink reference signal and the first information, where the first matrix indicates precoding corresponding to the m₁ port groups. Third indication information is sent, where the third indication information indicates the first matrix.

In embodiments of this application, the precoding corresponding to the m₁ port groups is fed back, and the precoding corresponding to the m₁*m₂ antenna ports is determined, without the need to directly calculate the precoding corresponding to the m₁*m₂ antenna ports. Therefore, when there are a large quantity of antenna ports, the calculation complexity of the precoding can be reduced.

With reference to the first aspect, in some implementations of the first aspect, the precoding corresponding to the m₁*m₂ antenna ports is determined based on a second weight matrix and the first matrix, and the second weight matrix is determined based on m₁ first weight matrices.

In embodiments of this application, the precoding corresponding to the m₁*m₂ antenna ports may be determined by using the first weight matrix and the precoding corresponding to the m₁ port groups, without the need to directly calculate the precoding corresponding to the m₁*m₂ antenna ports, so that the calculation complexity can be reduced.

With reference to the first aspect, in some implementations of the first aspect, each of the m₁ first weight matrices is a diagonal block element of the second weight matrix, and a value of an element in the second weight matrix other than the diagonal block element is 0.

In embodiments of this application, the m₁ first weight matrices are combined to determine the second weight matrix, so as to determine the precoding corresponding to the m₁*m₂ antenna ports. Because only one first weight matrix and the first matrix need to be reported, the indication overhead can be reduced.

With reference to the first aspect, in some implementations of the first aspect, the first indication information indicates an amplitude and a phase of each element in the first weight matrix. Alternatively, the first weight matrix is determined by performing linear weighting on a first orthogonal vector group, the first indication information indicates a weighting coefficient and an index of the first orthogonal vector group, and the weighting coefficient indicates an amplitude and a phase of each element in the first weight matrix.

In embodiments of this application, the first weight matrix may be indicated in different manners, thereby improving indication flexibility.

According to a second aspect, a precoding determining method is provided. The method includes: receiving first indication information, where the first indication information indicates a first weight matrix, the first weight matrix is used to determine precoding corresponding to m₁*m₂ antenna ports, the first weight matrix corresponds to one port group of a downlink channel, the downlink channel includes channels corresponding to m₁ port groups, a quantity of antenna ports included in each of the m₁ port groups is determined based on first information, the first information indicates a quantity m₂ of antenna ports included in each of the m₁ port groups, and/or the first information indicates a quantity n₁ of antenna ports in a first dimension and a quantity n₂ of antenna ports in a second dimension in each of the m₁ port groups, m₂ is determined based on n₁ and n₂, m₁ and m₂ are integers greater than 1, and n₁ and n₂ are positive integers; and determining, based on the first indication information, the precoding corresponding to the m₁*m₂ antenna ports.

In embodiments of this application, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group. In the method, the precoding corresponding to the m₁*m₂ antenna ports does not need to be directly calculated, so that calculation complexity of generating the precoding can be reduced, and indication overhead can be reduced.

With reference to the second aspect, in some implementations of the second aspect, second indication information is sent, where the second indication information indicates the first information.

With reference to the second aspect, in some implementations of the second aspect, the second indication information includes the first information, or the second indication information indicates an index of the first information in a first set. The first set includes at least one value or at least one value combination, and each of the at least one value combination includes two values. The total quantity m₂ of antenna ports that are included in each port group and that is indicated by the first information belongs to the at least one value, and/or the quantity of antenna ports in the first dimension and the quantity of antenna ports in the second dimension in each port group that are indicated by the first information belong to the at least one value combination.

With reference to the second aspect, in some implementations of the second aspect, when a quantity N₁ of antenna ports in the first dimension in the m₁*m₂ antenna ports varies, and/or a quantity N₂ of antenna ports in the second dimension in the m₁*m₂ antenna ports varies, one or more values included in a corresponding first set are different from one or more values included in a corresponding first set. Alternatively, when a quantity N₁ of antenna ports in the first dimension in the m₁*m₂ antenna ports varies, and/or a quantity N₂ of antenna ports in the second dimension in the m₁*m₂ antenna ports varies, each value included in a corresponding first set is the same as each value included in a corresponding first set. N₁*N₂=m₁*n₁*n₂.

With reference to the second aspect, in some implementations of the second aspect, the first set includes the at least one value combination, and a product of two values in a first value combination in the at least one value combination is the quantity m₂ of antenna ports included in each port group.

With reference to the second aspect, in some implementations of the second aspect, the second indication information further indicates second information, and the second information indicates the quantity N₁ of antenna ports in the first dimension and the quantity N₂ of antenna ports in the second dimension in the m₁*m₂ antenna ports.

With reference to the second aspect, in some implementations of the second aspect, third indication information is received, where the third indication information indicates a first matrix, and the first matrix indicates precoding corresponding to the m₁ port groups.

With reference to the second aspect, in some implementations of the second aspect, a second weight matrix is determined based on m₁ first weight matrices; and the precoding corresponding to the m₁*m₂ antenna ports is determined based on the second weight matrix and the first matrix.

With reference to the second aspect, in some implementations of the second aspect, each of the m₁ first weight matrices is a diagonal block element of the second weight matrix, and a value of an element in the second weight matrix other than the diagonal block element is 0.

With reference to the second aspect, in some implementations of the second aspect, the first indication information indicates an amplitude and a phase of each element in the first weight matrix. Alternatively, the first weight matrix is determined by performing linear weighting on a first orthogonal vector group, the first indication information indicates a weighting coefficient and an index of the first orthogonal vector group, and the weighting coefficient indicates an amplitude and a phase of each element in the first weight matrix.

It should be understood that technical effects that can be achieved by some implementations of the second aspect are similar to the technical effects that can be achieved by some implementations of the corresponding first aspect. Details are not described herein again.

According to a third aspect, a precoding determining method is provided. The method includes: determining a first weight matrix based on an uplink reference signal and first information, where the uplink reference signal is used to determine channel information of a downlink channel, the downlink channel includes channels corresponding to m₁ port groups, the first information indicates a total quantity m₂ of antenna ports included in each of the m₁ port groups, and/or the first information indicates a quantity n₁ of antenna ports in a first dimension and a quantity n₂ of antenna ports in a second dimension in each of the m₁ port groups, the first weight matrix corresponds to one of the m₁ port groups, the first weight matrix is used to determine precoding corresponding to m₁*m₂ antenna ports, m₂ is determined based on n₁ and n₂, m₁ and m₂ are integers greater than 1, and n₁ and n₂ are positive integers; and sending first indication information, where the first indication information indicates the first weight matrix.

In embodiments of this application, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group. In the method, the precoding corresponding to the m₁*m₂ antenna ports does not need to be directly calculated, so that calculation complexity of generating the precoding can be reduced, and indication overhead can be reduced.

With reference to the third aspect, in some implementations of the third aspect, second indication information is sent, where the second indication information indicates the first information.

With reference to the third aspect, in some implementations of the third aspect, the second indication information includes the first information, or the second indication information indicate an index of the first information in a first set. The first set includes at least one value or at least one value combination, and each of the at least one value combination includes two values. The total quantity m₂ of antenna ports that are included in each port group and that is indicated by the first information belongs to the at least one value, and/or the quantity of antenna ports in the first dimension and the quantity of antenna ports in the second dimension in each port group that are indicated by the first information belong to the at least one value combination.

With reference to the third aspect, in some implementations of the third aspect, when a quantity N₁ of antenna ports in the first dimension in the m₁*m₂ antenna ports varies, and/or a quantity N₂ of antenna ports in the second dimension in the m₁*m₂ antenna ports varies, one or more values included in a corresponding first set are different from one or more values included in a corresponding first set. Alternatively, when a quantity N₁ of antenna ports in the first dimension in the m₁*m₂ antenna ports varies, and/or a quantity N₂ of antenna ports in the second dimension in the m₁*m₂ antenna ports varies, each value included in a corresponding first set is the same as each value included in a corresponding first set. N₁*N₂=m₁*n₁*n₂.

With reference to the third aspect, in some implementations of the third aspect, the first set includes the at least one value combination, and a product of two values in a first value combination in the at least one value combination is the quantity m₂ of antenna ports included in each port group.

With reference to the third aspect, in some implementations of the third aspect, the second indication information further indicates second information, and the second information indicates the quantity N₁ of antenna ports in the first dimension and the quantity N₂ of antenna ports in the second dimension in the m₁*m₂ antenna ports.

With reference to the third aspect, in some implementations of the third aspect, third indication information is received, where the third indication information indicates a first matrix, and the first matrix indicates precoding corresponding to the m₁ port groups.

With reference to the third aspect, in some implementations of the third aspect, a second weight matrix is determined based on m₁ first weight matrices; and the precoding corresponding to the m₁*m₂ antenna ports is determined based on the second weight matrix and the first matrix.

With reference to the third aspect, in some implementations of the third aspect, each of the m₁ first weight matrices is a diagonal block element of the second weight matrix, and a value of an element in the second weight matrix other than the diagonal block element is 0.

With reference to the third aspect, in some implementations of the third aspect, the first indication information indicates an amplitude and a phase of each element in the first weight matrix. Alternatively, the first weight matrix is determined by performing linear weighting on a first orthogonal vector group, the first indication information indicates a weighting coefficient and an index of the first orthogonal vector group, and the weighting coefficient indicates an amplitude and a phase of each element in the first weight matrix. Alternatively, the first indication information indicates an index of the first weight matrix in a preset weight matrix set, and the preset weight matrix set includes one or more weight matrices.

It should be understood that technical effects that can be achieved by some implementations of the third aspect are similar to the technical effects that can be achieved by some implementations of the corresponding first aspect. Details are not described herein again.

According to a fourth aspect, a precoding determining method is provided. The method includes: receiving first indication information, where the first indication information indicates a first weight matrix, the first weight matrix is used to determine precoding corresponding to m₁*m₂ antenna ports, the first weight matrix corresponds to one port group of a downlink channel, the downlink channel includes channels corresponding to m₁ port groups, a quantity of antenna ports included in each of the m₁ port groups is determined based on first information, the first information indicates a total quantity m₂ of antenna ports included in each of the m₁ port groups, and/or the first information indicates a quantity n₁ of antenna ports in a first dimension and a quantity n₂ of antenna ports in a second dimension in each of the m₁ port groups, m₂ is determined based on n₁ and n₂, m₁ and m₂ are integers greater than 1, and n₁ and n₂ are positive integers; determining a first matrix based on the first information and the first indication information, where the first matrix indicates precoding corresponding to the m₁ port groups; and sending third indication information, where the third indication information indicates the first matrix.

In embodiments of this application, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group. In the method, the precoding corresponding to the m₁*m₂ antenna ports does not need to be directly calculated, so that calculation complexity of generating the precoding can be reduced, and indication overhead can be reduced.

With reference to the fourth aspect, in some implementations of the fourth aspect, second indication information is received, where the second indication information indicates the first information.

With reference to the fourth aspect, in some implementations of the fourth aspect, the second indication information includes the first information, or the second indication information indicate an index of the first information in a first set. The first set includes at least one value or at least one value combination, and each of the at least one value combination includes two values. The total quantity m₂ of antenna ports that are included in each port group and that is indicated by the first information belongs to the at least one value, and/or the quantity of antenna ports in the first dimension and the quantity of antenna ports in the second dimension in each port group that are indicated by the first information belong to the at least one value combination.

With reference to the fourth aspect, in some implementations of the fourth aspect, when a quantity N₁ of antenna ports in the first dimension in the m₁*m₂ antenna ports varies, and/or a quantity N₂ of antenna ports in the second dimension in the m₁*m₂ antenna ports varies, one or more values included in a corresponding first set are different from one or more values included in a corresponding first set. Alternatively, when a quantity N₁ of antenna ports in the first dimension in the m₁*m₂ antenna ports varies, and/or a quantity N₂ of antenna ports in the second dimension in the m₁*m₂ antenna ports varies, each value included in a corresponding first set is the same as each value included in a corresponding first set. N₁*N₂=m₁*n₁*n₂.

With reference to the fourth aspect, in some implementations of the fourth aspect, the first set includes the at least one value combination, and a product of two values in a first value combination in the at least one value combination is the quantity m₂ of antenna ports included in each port group.

With reference to the fourth aspect, in some implementations of the fourth aspect, the second indication information further indicates second information, and the second information indicates the quantity N₁ of antenna ports in the first dimension and the quantity N₂ of antenna ports in the second dimension in the m₁*m₂ antenna ports.

With reference to the fourth aspect, in some implementations of the fourth aspect, the precoding corresponding to the m₁*m₂ antenna ports is determined based on a second weight matrix and the first matrix, and the second weight matrix is determined based on m₁ first weight matrices.

With reference to the fourth aspect, in some implementations of the fourth aspect, each of the m₁ first weight matrices is a diagonal block element of the second weight matrix, and a value of an element in the second weight matrix other than the diagonal block element is 0.

With reference to the fourth aspect, in some implementations of the fourth aspect, the first indication information indicates an amplitude and a phase of each element in the first weight matrix. Alternatively, the first weight matrix is determined by performing linear weighting on a first orthogonal vector group, the first indication information indicates a weighting coefficient and an index of the first orthogonal vector group, and the weighting coefficient indicates an amplitude and a phase of each element in the first weight matrix. Alternatively, the first indication information indicates an index of the first weight matrix in a preset weight matrix set, and the preset weight matrix set includes one or more weight matrices.

It should be understood that technical effects that can be achieved by some implementations of the fourth aspect are similar to the technical effects that can be achieved by some implementations of the corresponding first aspect. Details are not described herein again.

According to a fifth aspect, a communication apparatus is provided. The apparatus includes a module or a unit configured to implement any one of the first aspect or the fourth aspect or the possible implementations of the first aspect or the fourth aspect.

According to a sixth aspect, a communication apparatus is provided. The apparatus includes a module or a unit configured to implement any one of the second aspect or the third aspect or the possible implementations of the second aspect or the third aspect.

According to a seventh aspect, a communication apparatus is provided. The communication apparatus includes at least one processor and a communication interface. The communication interface is used by the communication apparatus to exchange information with another communication apparatus. When program instructions are executed by the at least one processor, the communication apparatus is caused to perform the method according to any one of the first aspect or the fourth aspect or the possible implementations of the first aspect or the fourth aspect.

According to an eighth aspect, a communication apparatus is provided. The communication apparatus includes at least one processor and a communication interface. The communication interface is used by the communication apparatus to exchange information with another communication apparatus. When program instructions are executed by the at least one processor, the communication apparatus is caused to perform the method according to any one of the second aspect or the third aspect or the possible implementations of the second aspect or the third aspect.

According to a ninth aspect, a communication system is provided. The communication system includes the communication apparatus according to the seventh aspect and the communication apparatus according to the eighth aspect.

According to a tenth aspect, a computer-readable storage medium is provided. The computer-readable storage medium stores program code to be executed by a device. When the program code is executed, the method according to any one of the first aspect, the second aspect, the third aspect, and the fourth aspect or the possible implementations of the first aspect, the second aspect, the third aspect, and the fourth aspect is performed.

According to an eleventh aspect, a chip is provided. The chip includes at least one processor. When program instructions are executed by the at least one processor, the method according to any one of the first aspect, the second aspect, the third aspect, and the fourth aspect or the possible implementations of the first aspect, the second aspect, the third aspect, and the fourth aspect is performed.

According to a twelfth aspect, a computer program product is provided. The computer program product includes program instructions. When the computer program product is run on a computer, the computer is caused to perform the method according to any one of the first aspect, the second aspect, the third aspect, and the fourth aspect or the possible implementations of the first aspect, the second aspect, the third aspect, and the fourth aspect.

### BRIEF DESCRIPTION OF DRAWINGS

FIG. 1 is a diagram of a structure of a communication system 100;
FIG. 2 is a schematic flowchart of a data sending method in FDD;
FIG. 3 is a diagram of determining precoding;
FIG. 4 is a schematic flowchart of a precoding determining method according to an embodiment of this application;
FIG. 5 is a schematic flowchart of a precoding determining method according to another embodiment of this application;
FIG. 6 is a schematic flowchart of a method 600 for determining a first weight matrix according to an embodiment of this application.
FIG. 7 is a schematic flowchart of a precoding determining method according to another embodiment of this application;
FIG. 8 is a block diagram of a structure of a communication apparatus 800 according to an embodiment of this application; and
FIG. 9 is a block diagram of a structure of a communication apparatus 900 according to an embodiment of this application.

### DESCRIPTION OF EMBODIMENTS

The following describes technical solutions of this application with reference to accompanying drawings.

All aspects, embodiments, or features are presented in embodiments of this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in embodiments of this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with evolution of a technology and emergence of a new service scenario.

Reference to "one embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In embodiments of this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

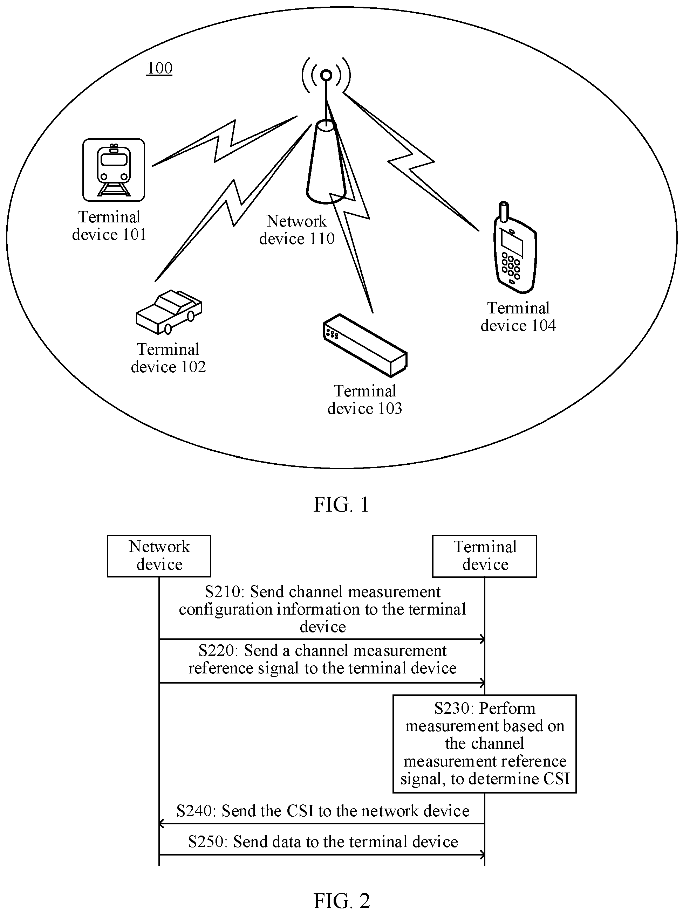

FIG. 1 is a diagram of a communication system 100 according to an embodiment of this application. The communication system 100 shown in FIG. 1 includes a network device 110 and terminal devices 101, 102, 103, and 104. The network device 110 sends downlink data to the terminal devices 101 to 104, and the terminal devices 101 to 104 send uplink data to the network device 110.

The communication system 100 is, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 4th generation (4th generation, 4G) system, a 5th generation (5th generation, 5G) system, a new radio (new radio, NR) system, or a future mobile communication system.

The network device 110 may be a device configured to communicate with a terminal, and is configured to connect the terminal to a radio access network (radio access network, RAN). The network device may also be sometimes referred to as an access network device, an access network node, or a base station. It may be understood that devices having functions of the base station may have different names in systems using different radio access technologies. For ease of description, in embodiments of this application, apparatuses that provide a wireless communication access function for a terminal are collectively referred to as a network device. The network device may be an evolved NodeB (evolved NodeB, eNB or eNodeB) in an LTE system, a gNodeB (gNodeB, gNB) in NR, a next generation evolved NodeB (next generation eNodeB, ng-eNB) or a transmission reception point (transmission receiving point/transmission reception point, TRP), a base station evolved after the 3rd generation partnership project (3rd generation partnership project, 3GPP), or an access node, a wireless relay node, a wireless backhaul node, or the like in a wireless network communication technology (Wi-Fi) system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or one antenna panel or a group of antenna panels (including a plurality of antenna panels) of a base station in a 5G system, or may be a network node that forms a next-generation node base station (next-generation Node Base station, gNB) or a transmission point, for example, a baseband unit (baseband unit, BBU), a distributed unit (distributed unit, DU), or a central unit (central unit, CU). This is not limited in embodiments of this application.

The terminal devices 101 to 104 each are a device having a wireless transceiver function, and may send a signal to the network device, or receive a signal from the network device. The terminal may be an access terminal, a subscriber unit (subscriber unit), a subscriber station, a mobile station (mobile station, MS), a mobile console, a remote station, a remote terminal, a mobile device, a user terminal, user equipment (user equipment, UE), a wireless communication device, a user agent, or a user apparatus. Alternatively, the user equipment may be a cellular phone (cellular phone), a cordless phone, a session initiation protocol (session initiation protocol, SIP) phone, a wireless local loop (wireless local loop, WLL) station, a smartphone (smartphone), a personal digital assistant (personal digital assistant, PDA), a handheld device with a wireless communication function, a computing device, another processing device connected to a wireless modem, a vehicle-mounted device, a wearable device, a vehicle, a tablet computer, a sensor such as a smart speaker, a train detector, or a gas station, a terminal in a 5G network, user equipment in any form in a future network, or the like. This is not limited in embodiments of this application.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module, for example, a chip or a processor, that is in the terminal or the network device and that can invoke the program and execute the program.

FIG. 2 is a schematic flowchart of a data sending method in an FDD system. In FIG. 2, the following steps are included.

S210: Send channel measurement configuration information to a terminal device.

A network device sends the channel measurement configuration information to the terminal device, where the channel measurement configuration information indicates configuration information used by the terminal device to perform channel measurement. The configuration information includes, for example, a measurement time, a measurement mode, and a measurement parameter. Correspondingly, the terminal device receives the channel measurement configuration information from the network device.

S220: Send a channel measurement reference signal (reference signal, RS) to the terminal device.

The network device sends the channel measurement reference signal to the terminal device, where the channel measurement reference signal is used by the terminal device to perform channel measurement. Correspondingly, the terminal device receives the channel measurement reference signal from the network device.

S230: The terminal device performs measurement based on the channel measurement reference signal, to determine CSI.

S240: Send the CSI to the network device, and correspondingly, the network device receives the CSI from the terminal device.

S250: Send data to the terminal device.

The network device sends the data based on the CSI fed back by the terminal device. Specifically, the network device determines, based on a rank indication (rank indication, RI) fed back by the terminal device, a quantity of streams for transmitting the data to the terminal device. The network device determines, based on a channel quality indicator (channel quality indicator, CQI) fed back by the terminal device, a modulation order and a bit rate of channel coding for transmitting the data to the terminal device. The network device determines, based on PMI fed back by the terminal device, precoding used for transmitting the data to the terminal device.

In a 5G system, the precoding generally uses a two-level structure of W=W₁*W₂. W is a weight used when the network device sends data to the terminal device. W₁ indicates a group of beam vectors in a beam vector set, and W₂ indicates a beam in the group of beam vectors indicated by W₁. * indicates multiplication. The precoding is, for example, type 1 (Type I) precoding.

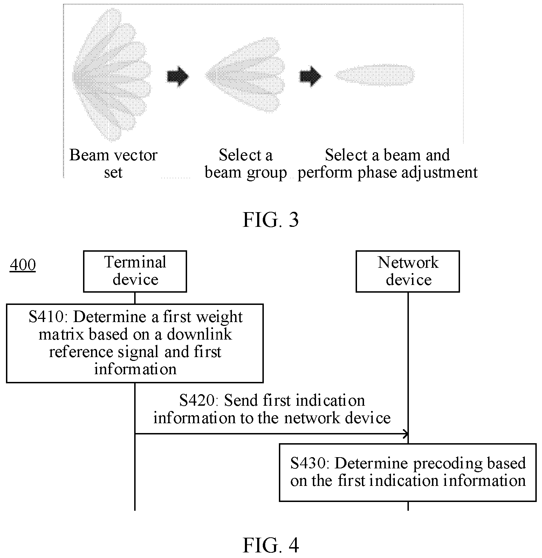

FIG. 3 is a diagram of a precoding generation process. As shown in FIG. 3, a beam vector set is first determined, that is, a set of all weights in each precoding is generated. Then, a group of beam vectors is selected from the beam vector set based on a wideband spatial characteristic of a channel, that is, W₁ is determined. Then, a beam is selected from the selected group of beam vectors based on a sub-band characteristic of the channel, and a phase difference between two polarization directions is quantized to implement phase adjustment between the polarization directions, that is, W₂ is determined.

The beam vector set is mainly determined by using parameter configurations of N₁, N₂, O₁, and O₂. N₁ represents a quantity of logical antenna ports in a first dimension of same polarization direction. N₂ represents a quantity of logical antenna ports in a second dimension of the same polarization direction. The first dimension is different from the second dimension. The first dimension is, for example, a horizontal dimension, and the second dimension is, for example, a vertical dimension. O₁ represents a discrete Fourier transform (discrete Fourier transform, DFT) oversampling multiple of a dimension (the first dimension) in which N₁ is located. O₂ represents a DFT oversampling multiple of a dimension (the second dimension) in which N₂ is located.

Specifically, when beamforming is performed, N₁*N₂ weight vectors whose first dimension is N₁ and second dimension is N₂ may be formed, and the N₁*N₂ weight vectors are orthogonal to each other. In other words, no interference exists between beams formed through weighting by using the N₁*N₂ weight vectors. A quantity of weight vectors may be increased in the first dimension and the second dimension by using the DFT oversampling multiples represented by O₁ and O₂, so that more weight vectors are generated. When an antenna form is determined, that is, when N₁ and N₂ are determined, a large value of O₁ and/or a large value of O₂ indicate/indicates a smaller beam step, higher accuracy, and higher beam density in the first dimension and/or the second dimension during beam scanning, but formed weight vectors are no longer orthogonal to each other, that is, interference exists between beams.

Because existing precoding supports a maximum of 32 logical antenna ports, if more than 32 logical antenna ports need to be supported, a quantity of logical antenna ports (namely, values of N₁ and N₂) corresponding to the precoding needs to be extended. When a dual-polarized antenna is used, a quantity of logical antenna ports supported by precoding is 2*N₁*N₂. For example, to support CSI measurement for 64 logical antenna ports, possible values of (N₁, N₂) need to be configured as (8, 4). When the oversampling multiples of the first dimension and the second dimension are 1, that is, when values of O₁ and O₂ each are 1, 32 orthogonal weight vectors are generated in each polarization direction, so that a total of 64 orthogonal weight vectors are generated in two polarization directions. To support CSI measurement for 128 logical antenna ports, values of (N₁, N₂) need to be configured as (8, 8) or (16, 4), and 64 orthogonal weight vectors are generated in each polarization direction. However, larger values of (N₁, N₂) indicate higher complexity of directly calculating precoding corresponding to q*N₁*N₂ antenna ports by the terminal device or the network device, and higher overhead for transmitting information indicating the precoding. q is a positive integer.

FIG. 4 is a schematic flowchart of a precoding determining method according to an embodiment of this application. The method in FIG. 4 is applied to the communication system 100 in FIG. 1. A terminal device in FIG. 4 is, for example, any one of the terminal devices 101 to 104 in FIG. 1, and a network device in FIG. 4 is, for example, the network device 110 in FIG. 1. The method in FIG. 4 includes the following steps.

S410: Determine a first weight matrix based on a downlink reference signal and first information.

The terminal device determines the first weight matrix based on the downlink reference signal and the first information. The downlink reference signal is used to obtain channel information of a downlink channel. The downlink channel includes channels corresponding to m₁ port groups. The first information indicates a total quantity m₂ of antenna ports included in each of the m₁ port groups, and/or the first information indicates a quantity n₁ of antenna ports in a first dimension and a quantity n₂ of antenna ports in a second dimension in each of the m₁ port groups. The first weight matrix corresponds to one of the m₁ port groups, and the first weight matrix is used to determine precoding corresponding to m₁*m₂ antenna ports. m₂ is determined based on n₁ and n₂, m₁ and m₂ are integers greater than 1, and n₁ and n₂ are positive integers.

In some embodiments, the downlink channel is a channel used by the network device to send data to the terminal device, for example, a physical downlink shared channel (physical downlink shared channel, PDSCH).

In some embodiments, the downlink reference signal is a channel state information-reference signal (CSI-RS).

Optionally, before step S410, the network device sends the downlink reference signal to the terminal device, and correspondingly, the terminal device receives the downlink reference signal from the network device.

Optionally, q*n₁*n₂=m₂. * indicates multiplication. A value of q is not limited in embodiments of this application. For example, q is a positive integer such as 1 or 2.

For example, the value of q is determined based on a quantity of polarization directions. When there is one polarization direction, q is 1. When there are two polarization directions, q is 2.

In some embodiments, the first information is predefined information, or the first information is indicated by the network device.

Optionally, before step S410, the terminal device receives second indication information from the network device. The second indication information indicates the first information.

In some embodiments, the second indication information is carried in a radio resource control (radio resource control, RRC) message, or the second indication information is carried in downlink control information (downlink control information, DCI). Specific signaling that carries the second indication information is not limited in embodiments of this application.

In some embodiments, the second indication information includes the first information, and/or the second indication information indicates an index of the first information in a first set. The first set includes at least one value and/or at least one value combination. Each of the at least one value combination includes two values. The total quantity m₂ of antenna ports that are included in each port group and that is indicated by the first information belongs to the at least one value in the first set, and/or the quantity of antenna ports in the first dimension and the quantity of antenna ports in the second dimension in each port group that are indicated by the first information belong to the at least one value combination in the first set. In other words, the first set includes a value set of m₂, and/or the first set includes a value set of n₁ and/or a value set of n₂.

In some embodiments, before step S410, the network device and the terminal device determine the first set. For example, the first set is a predefined set, or the terminal device receives fourth indication information from the network device, and the fourth indication information indicates the first set.

Optionally, when a quantity N₁ of antenna ports in the first dimension in the m₁*m₂ antenna ports varies, and/or a quantity N₂ of antenna ports in the second dimension in the m₁*m₂ antenna ports varies, one or more values in a corresponding first set are different from one or more values in a corresponding first set. In other words, different values of N₁ correspond to different first sets and/or different values of N₂ correspond to different first sets. N₁*N₂=m₁*n₁*n₂.

Optionally, when a quantity N₁ of antenna ports in the first dimension in the m₁*m₂ antenna ports varies, and/or a quantity N₂ of antenna ports in the second dimension in the m₁*m₂ antenna ports varies, each value in a corresponding first set is the same as each value in a corresponding first set. In other words, different values of N₁ correspond to a same first set and/or different values of N₂ correspond to a same first set.

In some embodiments, the first dimension and the second dimension are different dimensions. For example, the first dimension is a horizontal dimension, and the second dimension is a vertical dimension, or the first dimension is a vertical dimension, and the second dimension is a horizontal dimension.

Optionally, the second indication information further indicates second information. The second information indicates the quantity N₁ of antenna ports in the first dimension and the quantity N₂ of antenna ports in the second dimension in the m₁*m₂ antenna ports. Alternatively, before step S410, the terminal device receives fifth indication information from the network device, where the fifth indication information indicates the second information.

In some embodiments, the quantity m₁ of port groups included in the downlink channel is determined based on the total quantity (m₁*m₂) of antenna ports included in the downlink channel and the first information. Alternatively, the terminal device receives sixth indication information from the network device, where the sixth indication information indicates m₁.

For example, the sixth indication information and the second indication information are carried in a same message, or the sixth indication information and the second indication information are carried in different messages.

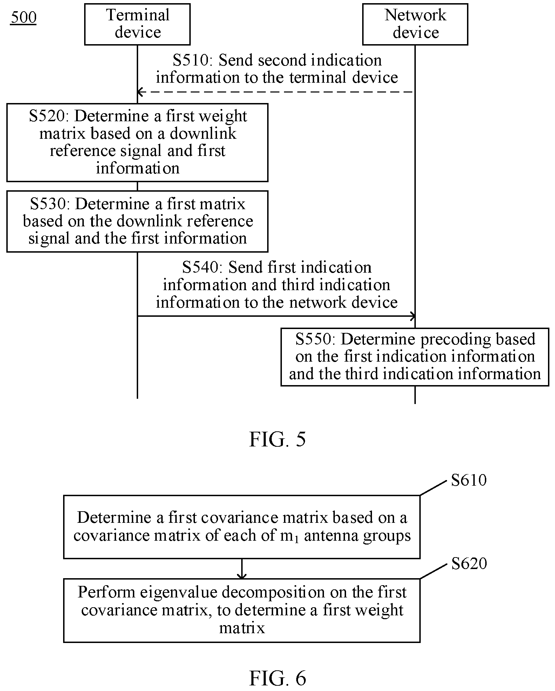

In some embodiments, the terminal device determines a covariance matrix of each of the m₁ port groups based on the downlink reference signal and the first information, to determine the first weight matrix. The covariance matrix of each port group indicates channel information of a channel corresponding to the port group. For a specific implementation, refer to descriptions in FIG. 6.

In some embodiments, the first weight matrix is a matrix with a size of m₂*1. In other words, the first weight matrix is a column vector, and the first weight matrix includes m₂ elements.

S420: Send first indication information to the network device.

After determining the first weight matrix, the terminal device sends the first indication information to the network device. The first indication information indicates the first weight matrix. Correspondingly, the network device receives the first indication information from the terminal device.

Optionally, the first indication information indicates an amplitude and a phase of each element in the first weight matrix.

Optionally, the first weight matrix is determined by performing linear weighting on a first orthogonal vector group. The first indication information indicates a weighting coefficient and an index of the first orthogonal vector group. The weighting coefficient of the first orthogonal vector group indicates an amplitude and a phase of each element in the first weight matrix. The index of the first orthogonal vector group is an index of the first orthogonal vector group in an orthogonal vector group set. The orthogonal vector group set includes at least one orthogonal vector group.

For example, the first orthogonal vector group is a two-dimensional DFT vector.

In some embodiments, the terminal device maps the first indication information to a resource element (resource element, RE) for transmission, where the RE is an RE in an uplink transmission resource such as a slot, a subframe, or a transport block (transport block, TB) that carries a physical uplink shared channel (physical uplink shared channel, PUSCH) or a physical uplink control channel (physical uplink control channel, PUCCH).

S430: Determine precoding based on the first indication information.

After receiving the first indication information, the network device determines, based on the first indication information, the precoding corresponding to the m₁*m₂ antenna ports.

Optionally, the network device determines a second weight matrix based on the first weight matrix indicated in the first indication information.

In some embodiments, the second weight matrix is determined based on m₁ first weight matrices.

For example, each of the m₁ first weight matrices is a diagonal block element of the second weight matrix. A value of an element in the second weight matrix other than the diagonal block element is 0.

For example, the first weight matrix is determined based on a first covariance matrix, and the first covariance matrix is a matrix obtained by performing weighted averaging on covariance matrices of the m₁ port groups.

In some embodiments, the second weight matrix is determined based on m₁ weight matrices, and the m₁ weight matrices include the first weight matrix.

For example, each of the m₁ weight matrices is a diagonal block element of the second weight matrix. A value of an element in the second weight matrix other than the diagonal block element is 0.

For example, an i^{th} weight matrix in the m₁ weight matrices is determined based on a covariance matrix of an i^{th} port group in the m₁ port groups, where i=1, ..., m₁. In other words, the first weight matrix is determined based on a first covariance matrix, and the first covariance matrix is a covariance matrix of any one of the m₁ port groups.

Optionally, the network device determines, based on the second weight matrix and a first matrix, the precoding corresponding to the m₁*m₂ antenna ports. The first matrix indicates precoding corresponding to the m₁ port groups. The precoding indicated by the first matrix indicates a beam in a group of beam vectors in a beam vector set.

For example, the first matrix is type-1 (Type I) precoding corresponding to the m₁ port groups.

For example, the precoding corresponding to the m₁*m₂ antenna ports is a product of the second weight matrix and the first matrix.

For example, assuming that the second weight matrix is A, and the first matrix is W₁*W₂, the precoding corresponding to the m₁*m₂ antenna ports is W=A*W₁*W₂. W is a weight used when the network device sends data to the terminal device. W₁ indicates a group of beam vectors in a beam vector set, and W₂ indicates a beam in the group of beam vectors indicated by W₁.

In embodiments of this application, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group. In the method, the precoding corresponding to the m₁*m₂ antenna ports does not need to be directly calculated, so that calculation complexity of generating the precoding can be reduced, and indication overhead can be reduced.

FIG. 5 is a schematic flowchart of a precoding determining method according to an embodiment of this application. The method in FIG. 5 is applied to the communication system 100 in FIG. 1. A terminal device in FIG. 5 is, for example, any one of the terminal devices 101 to 104 in FIG. 1, and a network device in FIG. 4 is, for example, the network device 110 in FIG. 1. The method in FIG. 5 includes the following steps.

S510: Send second indication information to the terminal device, and correspondingly, the terminal device receives the second indication information from the network device.

The second indication information indicates first information, and the first information indicates a total quantity m₂ of antenna ports included in each of m₁ port groups, and/or the first information indicates a quantity n₁ of antenna ports in a first dimension and a quantity n₂ of antenna ports in a second dimension in each of the m₁ port groups.

Optionally, q*n₁*n₂=m₂. * indicates multiplication. A value of q is not limited in embodiments of this application. For example, q is a positive integer such as 1 or 2.

For example, the value of q is determined based on a quantity of polarization directions. When there is one polarization direction, q is 1. When there are two polarization directions, q is 2.

Optionally, the second indication information includes the first information. To be specific, the second indication information includes the total quantity m₂ of antenna ports included in each port group, and/or the second indication information includes the quantity n₁ of antenna ports in the first dimension and the quantity n₂ of antenna ports in the second dimension in each port group.

Optionally, the second indication information indicates an index of the first information in a first set. The first set includes at least one value or at least one value combination. Each of the at least one value combination includes two values. The total quantity m₂ of antenna ports that are included in each port group and that is indicated by the first information belongs to the at least one value in the first set, and/or the quantity of antenna ports in the first dimension and the quantity of antenna ports in the second dimension in each port group that are indicated by the first information belong to the at least one value combination in the first set.

In some embodiments, before step S510, the network device and the terminal device determine the first set. For example, the first set is a predefined set, or the terminal device receives fourth indication information from the network device, and the fourth indication information indicates the first set.

For example, it is assumed that values included in the first set are shown in Table 1 or Table 2.

**Table 1 First set**

| Index | Value |
|---|---|
| 1 | 1 |
| 2 | 2 |
| 3 | 3 |
| 4 | 4 |

**Table 2 First set**

| Index | Value |
|---|---|
| 1 | 2 |
| 2 | 4 |
| 3 | 6 |
| 4 | 8 |

When the at least one value included in the first set is shown in Table 1, if the second indication information indicates that the index of the first information in the first set is 2, the first information indicates that the quantity of antenna ports included in each port group is 2. When the at least one value included in the first set is shown in Table 2, if the second indication information indicates that the index of the first information in the first set is 2, the first information indicates that the quantity of antenna ports included in each port group is 4.

For example, value combinations included in the first set are shown in Table 3.

**Table 3 First set**

| Index | Value combination |
|---|---|
| 1 | (1, 1) |
| 2 | (2, 1) |
| 3 | (1, 2) |
| 4 | (2, 2) |

In Table 3, a 1^{st} value in a value combination corresponds to the quantity of antenna ports in the first dimension in each port group, and a 2^{nd} value in the value combination corresponds to the quantity of antenna ports in the second dimension in each port group. When the at least one value combination included in the first set is shown in Table 3, if the second indication information indicates that the index of the first information in the first set is 2, the first information indicates that the quantity of antenna ports in the first dimension in each port group is 2, and the quantity of antenna ports in the second dimension in each port group is 1. In this case, the quantity of antenna ports included in each port group is q*2*1=2q. q is a positive integer.

For example, values and value combinations included in the first set are shown in Table 4 or Table 5.

**Table 4 First set**

| Index | Value | Value combination |
|---|---|---|
| 1 | 1 | (1, 1) |
| 2 | 2 | (2, 1) |
| 3 | 2 | (1, 2) |
| 4 | 4 | (2, 2) |

**Table 5 First set**

| Index | Value | Value combination |
|---|---|---|
| 1 | 2 | (1, 1) |
| 2 | 4 | (2, 1) |
| 3 | 4 | (1, 2) |
| 4 | 8 | (2, 2) |

In Table 4 or Table 5, a 1^{st} value in a value combination corresponds to the quantity of antenna ports in the first dimension in each port group, and a 2^{nd} value in the value combination corresponds to the quantity of antenna ports in the second dimension in each port group. When the at least one value and the at least one value combination included in the first set are shown in Table 4, if the second indication information indicates that the index of the first information in the first set is 3, the first information indicates that the total quantity m₂ of antenna ports included in each port group is 2, the quantity of antenna ports in the first dimension in each port group is 1, and the quantity of antenna ports in the second dimension in each port group is 2. When the at least one value and the at least one value combination included in the first set are shown in Table 5, if the second indication information indicates that the index of the first information in the first set is 3, the first information indicates that the total quantity m₂ of antenna ports included in each port group is 4, the quantity of antenna ports in the first dimension in each port group is 1, and the quantity of antenna ports in the second dimension in each port group is 2.

It should be understood that Table 1 to Table 5 are merely possible examples of the first set. A specific value included in the first set is not limited in embodiments of this application.

When the first information indicates the quantity m₂ of antenna ports included in each port group, the terminal device determines, based on third information, the quantity n₁ of antenna ports in the first dimension and the quantity n₂ of antenna ports in the second dimension in each port group. The third information indicates a correspondence between m₂ and n₁ and/or a correspondence between m₂ and n₂.

For example, the third information is predefined information, or before step S510, the terminal device receives seventh indication information from the network device, and the seventh indication information indicates the third information.

For example, the third information includes a second set, and the second set includes at least one value of m₂ and n₁ and/or n₂ corresponding to each value of m₂. Alternatively, the third information indicates a function relationship between m₂ and n₁ and/or a function relationship between m₂ and n₂. For example, the function relationship includes any one or more of the following: n₁=m₂, n₁=m₂/2, ${n}_{1} = \sqrt{{m}_{2} / 2}$, n₂=m₂, n₂=m₂/2, ${n}_{2} = \sqrt{{m}_{2} / 2}$, and the like.

For example, the seventh indication information and the second indication information are carried in a same message, or the seventh indication information and the second indication information are carried in different messages.

Optionally, when a quantity N₁ of antenna ports in the first dimension in the m₁*m₂ antenna ports varies, and/or a quantity N₂ of antenna ports in the second dimension in the m₁*m₂ antenna ports varies, at least one value in a corresponding first set is different from at least one value in a corresponding first set. In other words, different values of N₁ correspond to different first sets, and/or different values of N₂ correspond to different first sets. That two first sets are different includes: At least one value in one first set is different from at least one value in the other first set. In other words, when the first set includes the at least one value, one or more values in one first set are different from one or more values in the other first set. Alternatively, when the first set includes the at least one value combination, at least one value in one or more value combinations in one first set is different from at least one value in one or more value combinations in the other first set. In other words, when a value of N₁ and/or a value of N₂ change/changes, corresponding first sets are different sets. N₁*N₂=m₁*n₁*n₂.

For example, at least one value in a corresponding first set when a value of N₁ is a first value is different from at least one value in a corresponding first set when the value of N₁ is a second value. Alternatively, at least one value in a corresponding first set when a value of N₂ is a third value is different from at least one value in a corresponding first set when the value of N₂ is a fourth value. Alternatively, at least one value in a corresponding first set when a value of N₁ is a first value and a value of N₂ is a third value is different from at least one value in a corresponding first set when the value of N₁ is the first value and the value of N₂ is a fourth value. Alternatively, at least one value in a corresponding first set when a value of N₁ is a first value and a value of N₂ is a third value is different from at least one value in a corresponding first set when the value of N₁ is a second value and the value of N₂ is the third value. The first value is different from the second value, and the third value is different from the fourth value.

Optionally, when a quantity N₁ of antenna ports in the first dimension in the m₁*m₂ antenna ports varies, and/or a quantity N₂ of antenna ports in the second dimension in the m₁*m₂ antenna ports varies, each value in a corresponding first set is the same as each value in a corresponding first set. In other words, different values of N₁ correspond to a same first set, and/or different values of N₂ correspond to a same first set. That two first sets are the same includes: Each value in one first set is the same as each value in the other first set. In other words, when the first set includes the at least one value, each value in one first set is different from each value in the other first set. Alternatively, when the first set includes the at least one value combination, each value in each value combination in one first set is different from each value in each value combination in the other first set. In other words, regardless of how values of N₁ and N₂ change, corresponding first sets are a same set.

Optionally, the second indication information further indicates second information. The second information indicates the quantity N₁ of antenna ports in the first dimension and the quantity N₂ of antenna ports in the second dimension in the m₁*m₂ antenna ports. m₁*m₂=q*N₁*N₂. A value of q is not limited in embodiments of this application. For example, q is a positive integer such as 1 or 2. For example, the value of q is determined based on a quantity of polarization directions. When there is one polarization direction, q is 1. When there are two polarization directions, q is 2.

For example, the second information includes the quantity N₁ of antenna ports in the first dimension and the quantity N₂ of antenna ports in the second dimension in the m₁*m₂ antenna ports. Alternatively, the second information indicates an index of N₁ and/or an index of N₂ in a third set. The third set includes at least one value. Alternatively, the third set includes at least one value combination, and each value combination includes two values. N₁ and/or N₂ indicated by the second information belong/belongs to the at least one value in the first set, and/or N₁ and N₂ indicated by the second information belong to the at least one value combination in the first set. In other words, the third set includes a value set of N₁ and/or a value set of N₂.

When the second indication information does not indicate the second information, before step S520, the terminal device receives fifth indication information from the network device, where the fifth indication information indicates the second information.

Optionally, step S510 may not be performed. In other words, the first information may be predefined.

S520: Determine a first weight matrix based on a downlink reference signal and the first information. A specific implementation of step S520 is similar to the implementation of step S410. Details are not described herein again.

S530: Determine a first matrix based on the downlink reference signal and the first information.

The downlink reference signal is used to obtain channel information of a downlink channel, and the downlink channel includes channels corresponding to the m₁ port groups. The first matrix indicates precoding corresponding to the m₁ port groups. The precoding indicated by the first matrix indicates a beam in a group of beam vectors in a beam vector set.

The terminal device maps each port group to one virtual port based on the downlink reference signal and the first information, and determines a mapping manner between each port group and a corresponding virtual port. The terminal device determines the first matrix based on channel information of a channel corresponding to each virtual port.

In some embodiments, the first matrix is W₁*W₂. W₁ indicates a group of beam vectors in a beam vector set, and W₂ indicates a beam in the group of beam vectors indicated by W₁.

For example, the first matrix is Type I precoding corresponding to the m₁ port groups.

For example, third indication information is PMI information.

S540: Send first indication information and the third indication information to the network device.

After determining the first weight matrix, the terminal device sends the first indication information to the network device. The first indication information indicates the first weight matrix. For a specific implementation, refer to the descriptions in step S420.

After determining the first matrix, the terminal device sends the third indication information to the network device. The third indication information indicates the first matrix.

For example, the first indication information and the third indication information are located in a same message, or the first indication information and the third indication information are located in different messages.

S550: Determine precoding based on the first indication information and the third indication information.

After receiving the first indication information and the third indication information, the network device determines, based on the first weight matrix indicated by the first indication information and the first matrix indicated by the third indication information, the precoding corresponding to the m₁*m₂ antenna ports. For an implementation of step S550, refer to the descriptions in step S430.

In embodiments of this application, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group and the first matrix corresponding to the m₁ port groups. In the method, the precoding corresponding to the m₁*m₂ antenna ports does not need to be directly calculated, so that calculation complexity of generating the precoding can be reduced. In addition, in the method, only the first weight matrix and the first matrix may be reported, without the need to report the precoding corresponding to the m₁*m₂ antenna ports, thereby reducing indication overhead.

FIG. 6 is a schematic flowchart of a method for determining a first weight matrix according to an embodiment of this application. The method in FIG. 6 is performed by a communication apparatus, and the communication apparatus is, for example, a terminal device or a network device in embodiments of this application. The method in FIG. 6 includes the following steps.

S610: Determine a first covariance matrix based on a covariance matrix of each of m₁ port groups.

After determining the m₁ port groups of a downlink channel, the communication apparatus measures, based on a downlink reference signal, a channel corresponding to each port group, to determine a covariance matrix of each port group. The covariance matrix of each port group indicates channel information of the channel corresponding to each port group.

In some embodiments, the covariance matrix is any one of the following: an instantaneous covariance matrix, a statistical covariance matrix, a space-frequency joint instantaneous covariance matrix, and a space-frequency joint statistical covariance matrix.

The instantaneous covariance matrix *R = HH^{H}.* H represents a channel matrix corresponding to a first port group at a first moment. H is a matrix with a size of m₂*m₃, m₂ is a quantity of antenna ports included in the first port group, and m₃ is a quantity of antenna ports of the terminal device. *H^{H}* represents a conjugate transpose matrix of H. The statistical covariance matrix *R̅*=*αR̅'̅*+(1-*α*)*R. R̅'̅* represents a historical statistical covariance matrix, namely, a statistical covariance matrix determined based on a channel matrix corresponding to the first port group at a historical moment, and the historical moment is a moment before the first moment. *α* represents a weighting coefficient. A value of *α* is not limited in embodiments of this application, for example, *α* = 0.9. The space-frequency joint instantaneous covariance matrix *R' = H*¹*H*¹*^{H}. H'* e *C*, C is a channel matrix with a size of (m₁*m₂*N_{RB})*m₃, and *N _{RB}* is a quantity of resource blocks (resource blocks, RBs) of a subband reported by the terminal device. *H*¹ is a matrix with a size of (m₂*N_{RB})*m₃. *H*^{1*H*} represents a conjugate transpose matrix of *H*¹. The space-frequency joint statistical covariance matrix *̅R̅*̅¹̅=*α**̅R̅*̅^̅{̅1̅'̅}̅+(1-*α*)*R*¹. *̅R̅*̅^̅{̅1̅'̅}̅ represents a space-frequency joint historical statistical covariance matrix, namely, a statistical covariance matrix determined based on a space-frequency joint channel matrix corresponding to the first port group at a historical moment. The first port group is any one of the m₁ port groups.

When the covariance matrix is the statistical covariance matrix or the spatial-frequency joint statistical covariance matrix, because the covariance matrix is determined based on a channel matrix at a historical moment, the first weight matrix determined based on the covariance matrix may be reported at an interval of a specific period, thereby further reducing indication overhead.

Optionally, the first covariance matrix is a matrix determined by performing weighted averaging on covariance matrices of the m₁ port groups. In other words, the communication apparatus performs weighted averaging on the covariance matrices of the m₁ port groups, to determine the first covariance matrix. Alternatively, the first covariance matrix is a covariance matrix of any one of the m₁ port groups.

In some embodiments, the communication apparatus separately squares the covariance matrices of the m₁ port groups, and then performs weighted averaging on the squared covariance matrices of the m₁ port groups, to determine the first covariance matrix.

In some embodiments, the first covariance matrix is a matrix obtained by squaring a covariance matrix of any one of the m₁ port groups.

S620: Perform eigenvalue decomposition on the first covariance matrix, to determine a first weight matrix.

The communication apparatus performs eigenvalue decomposition (eigenvalue decomposition, EVD) on the first covariance matrix, to determine an eigenvector matrix and an eigenvalue matrix of the first covariance matrix. The eigenvector matrix includes at least one eigenvector of the first covariance matrix, and the eigenvalue matrix includes at least one eigenvalue of the first covariance matrix. Each eigenvalue in the eigenvalue matrix corresponds to one eigenvector in the eigenvector matrix. The communication apparatus determines the first weight matrix based on the eigenvector matrix and the eigenvalue matrix of the first covariance matrix.

Specifically, the communication apparatus determines, from the eigenvector matrix of the first covariance matrix based on a largest eigenvalue in the eigenvalue matrix of the first covariance matrix, an eigenvector corresponding to the largest eigenvalue. In other words, the first weight matrix is an eigenvector corresponding to a largest eigenvalue in eigenvalues of the first covariance matrix.

In some embodiments, arrangement of elements in the first weight matrix is related to an arrangement manner of antenna ports in a port group and arrangement of channels corresponding to the port group. When the antenna ports in the port group are arranged in different manners and/or the channels corresponding to the port group are arranged differently, the elements in the first weight matrix are arranged differently.

When the first covariance matrix is a matrix determined by performing weighted averaging on the covariance matrices of the m₁ port groups, the second weight matrix in step S430 is determined based on m₁ first weight matrices. For example, a structure of the second weight matrix is shown in the following formula (1): ${\left[\begin{matrix}{P}_{c} & ⋯ & 0 \\ 0 & ⋱ & 0 \\ 0 & 0 & {P}_{c}\end{matrix}\right]}_{{m}_{1} \times {m}_{1}}$ Formula (1).

P_{c} represents the first weight matrix. P_{c} is a matrix with a size of m₂*1. In other words, when the first covariance matrix is a matrix determined by performing weighted averaging on the covariance matrices of the m₁ port groups, the communication apparatus needs to determine only one first weight matrix, and indicate the first weight matrix by using first indication information.

When the first covariance matrix is a covariance matrix of any one of the m₁ port groups, the second weight matrix in step S430 is determined based on m₁ weight matrices. For example, a structure of the second weight matrix is shown in the following formula (2): ${\left[\begin{matrix}{P}_{1} & ⋯ & 0 \\ 0 & ⋱ & 0 \\ 0 & 0 & {P}_{{m}_{1}}\end{matrix}\right]}_{{m}_{1} \times {m}_{1}}$ Formula (2).

Pⱼ is a weight matrix corresponding to a j^{th} port group in the m₁ port groups, and j=1, ..., m₁. Pⱼ is a matrix with a size of m₂*1. When a covariance matrix of the j^{th} port group is the first covariance matrix, Pⱼ is the first weight matrix corresponding to the first covariance matrix. In other words, when the first covariance matrix is a covariance matrix of any one of the m₁ port groups, the communication apparatus needs to determine a weight matrix corresponding to each of the m₁ port groups, and indicate the m₁ weight matrices by using first indication information. The m₁ weight matrices include the first weight matrix.

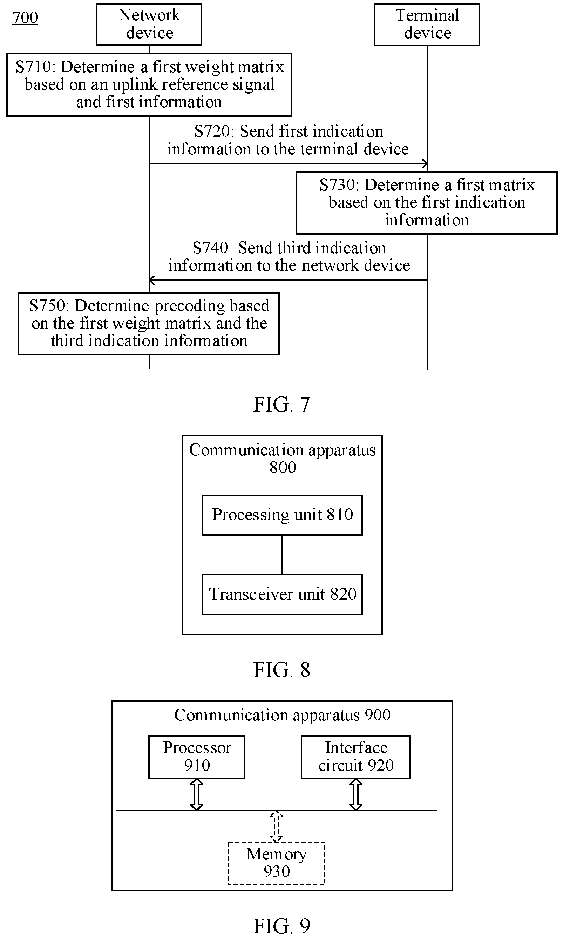

FIG. 7 is a schematic flowchart of a precoding determining method according to an embodiment of this application. The method in FIG. 7 is applied to the communication system 100 in FIG. 1. A terminal device in FIG. 7 is, for example, any one of the terminal devices 101 to 104 in FIG. 1, and a network device in FIG. 7 is, for example, the network device 110 in FIG. 1. The method in FIG. 7 includes the following steps.

S710: Determine a first weight matrix based on an uplink reference signal and first information.

The network device determines the first weight matrix based on the uplink reference signal and the first information. The uplink reference signal is used to determine channel information of a downlink channel. The downlink channel includes channels corresponding to m₁ port groups. The first information indicates a total quantity m₂ of antenna ports included in each of the m₁ port groups, and/or the first information indicates a quantity n₁ of antenna ports in a first dimension and a quantity n₂ of antenna ports in a second dimension in each of the m₁ port groups. The first weight matrix corresponds to one of the m₁ port groups, and the first weight matrix is used to determine precoding corresponding to m₁*m₂ antenna ports. m₂ is determined based on n₁ and n₂, m₁ and m₂ are integers greater than 1, and n₁ and n₂ are positive integers. * indicates multiplication.

In some embodiments, the network device determines channel information of an uplink channel based on the uplink reference signal. The network device estimates the channel information of the downlink channel based on the channel information of the uplink channel.

For example, the uplink reference signal is a channel sounding reference signal (sounding reference signal, SRS).

For example, the uplink channel is a channel used by the terminal device to send data to the network device, for example, a physical uplink shared channel (physical uplink shared channel, PUSCH). The downlink channel is a channel used by the network device to send data to the terminal device, for example, a physical downlink shared channel (physical downlink shared channel, PDSCH).

Optionally, before step S710, the network device receives the uplink reference signal from the terminal device.

In some embodiments, the first dimension and the second dimension are different dimensions. For example, the first dimension is a horizontal dimension, and the second dimension is a vertical dimension, or the first dimension is a vertical dimension, and the second dimension is a horizontal dimension.

Optionally, q*n₁*n₂=m₂. * indicates multiplication. A value of q is not limited in embodiments of this application. For example, q is a positive integer such as 1 or 2.

For example, the value of q is determined based on a quantity of polarization directions. When there is one polarization direction, q is 1. When there are two polarization directions, q is 2.

In some embodiments, the network device determines a covariance matrix of each of the m₁ port groups based on the uplink reference signal and the first information, to determine the first weight matrix. For a specific implementation of determining the first weight matrix based on the covariance matrix of each of the m₁ port groups, refer to the descriptions in FIG. 6.

In some embodiments, the first weight matrix is a matrix with a size of m₂*1. In other words, the first weight matrix is a column vector, and the first weight matrix includes m₂ elements.

In some embodiments, the first information is predefined information.

Optionally, the network device sends second indication information to the terminal device, and correspondingly, the terminal device receives the second indication information from the network device. The second indication information indicates the first information. For the second indication information and the first information, refer to the descriptions in step S410 or S510.

Optionally, the second indication information further indicates second information. The second information indicates a quantity N₁ of antenna ports in the first dimension and a quantity N₂ of antenna ports in the second dimension in the m₁*m₂ antenna ports. Alternatively, before step S710, the network device sends fifth indication information to the terminal device, where the fifth indication information indicates the second information. For details, refer to the descriptions in S510.

In some embodiments, the quantity m₁ of port groups included in the downlink channel is determined based on the total quantity (m₁*m₂) of antenna ports included in the downlink channel and the first information. Alternatively, the network device sends sixth indication information to the terminal device, where the sixth indication information indicates m₁.

For example, the sixth indication information and the second indication information are carried in a same message, or the sixth indication information and the second indication information are carried in different messages.

S720: Send first indication information to the terminal device.

After determining the first weight matrix, the network device sends the first indication information to the terminal device. The first indication information indicates the first weight matrix. Correspondingly, the terminal device receives the first indication information from the network device.

Optionally, the first indication information indicates an amplitude and a phase of each element in the first weight matrix.

Optionally, the first weight matrix is determined by performing linear weighting on a first orthogonal vector group. The first indication information indicates a weighting coefficient and an index of the first orthogonal vector group. The weighting coefficient of the first orthogonal vector group indicates an amplitude and a phase of each element in the first weight matrix. The index of the first orthogonal vector group is an index of the first orthogonal vector group in an orthogonal vector group set. The orthogonal vector group set includes at least one orthogonal vector group.

For example, the first orthogonal vector group is a two-dimensional DFT vector.

Optionally, the first indication information indicates an index of the first weight matrix in a preset weight matrix set. The preset weight matrix set includes one or more weight matrices.

In some embodiments, before step S720, the network device and the terminal device determine the preset weight matrix set.

In some embodiments, the first indication information is carried in a radio resource control (radio resource control, RRC) message, or the first indication information is carried in downlink control information (downlink control information, DCI). Specific signaling that carries the first indication information is not limited in embodiments of this application.

S730: Determine a first matrix based on the first indication information.

After receiving the first indication information, the terminal device determines the first matrix based on the first weight matrix indicated by the first indication information. The first matrix indicates precoding corresponding to the m₁ port groups. The precoding indicated by the first matrix indicates a beam in a group of beam vectors in a beam vector set.

In some embodiments, the terminal device determines, based on the downlink channel, the first information, and the first weight matrix, the m₁ port groups in the downlink channel, the m₂ antenna ports included in each port group, and a virtual port corresponding to each port group. The first weight matrix indicates antenna ports included in each port group and a mapping manner between each port group and a virtual port. The terminal device determines the first matrix based on channel information of a channel corresponding to each virtual port.

In some embodiments, the first matrix is W₁*W₂. W₁ indicates a group of beam vectors in a beam vector set, and W₂ indicates a beam in the group of beam vectors indicated by W₁.

For example, the first matrix is Type I precoding corresponding to m₁ virtual ports.

S740: Send third indication information to the network device.

After determining the first matrix, the network device sends the third indication information to the terminal device. The third indication information indicates the first matrix. Correspondingly, the terminal device receives the third indication information from the network device.

For example, the third indication information is PMI information.

S750: Determine precoding based on the first weight matrix and the third indication information.

After receiving the third indication information, the network device determines, based on the first matrix indicated by the third indication information and the first weight matrix, the precoding corresponding to the m₁*m₂ antenna ports. For an implementation of step S750, refer to the descriptions in step S430.

In embodiments of this application, the m₁*m₂ antenna ports corresponding to the downlink channel are grouped into the m₁ port groups, and each port group is mapped to one virtual port, so that the precoding corresponding to the m₁*m₂ antenna ports is determined by using a weight matrix corresponding to one port group. In the method, the precoding corresponding to the m₁*m₂ antenna ports does not need to be directly calculated, so that calculation complexity of generating the precoding can be reduced. In addition, the terminal device does not need to calculate the first weight matrix, thereby further reducing calculation complexity of the terminal device. In addition, the terminal device may report only the first matrix, without the need to report the precoding corresponding to the m₁*m₂ antenna ports, thereby reducing indication overhead

FIG. 8 and FIG. 9 are diagrams of structures of possible communication apparatuses according to embodiments of this application. These communication apparatuses may be configured to implement functions of the terminal device or the network device in the foregoing method embodiments. Therefore, beneficial effects of the foregoing method embodiments can also be achieved. In embodiments of this application, the communication apparatus may be the network device 110 shown in FIG. 1, or may be the terminal device 101 to the terminal device 104 shown in FIG. 1. Alternatively, the communication apparatus may be the terminal device or the network device in FIG. 4 to FIG. 7.

As shown in FIG. 8, the communication apparatus 800 includes a processing unit 810 and a transceiver unit 820. The communication apparatus 800 is configured to implement a function of the terminal device or the network device in the method embodiments shown in FIG. 4 to FIG. 7.

When the communication apparatus 800 is configured to implement the function of the terminal device in the method embodiment shown in FIG. 4, the processing unit 810 is configured to determine a first weight matrix based on a downlink reference signal and first information. The processing unit 810 is configured to perform step S410 in FIG. 4. The transceiver unit 820 is configured to send first indication information to the network device. The transceiver unit 820 is configured to perform step S420 in FIG. 4. The downlink reference signal, the first information, the first weight matrix, and the first indication information are similar to the downlink reference signal, the first information, the first weight matrix, and the first indication information in FIG. 4. Details are not described herein again.

In some embodiments, when the communication apparatus 800 is configured to implement the function of the terminal device in the method embodiment shown in FIG. 4, the processing unit 810 is further configured to perform step S610 and step S620 in FIG. 6.

When the communication apparatus 800 is configured to implement the function of the network device in the method embodiment shown in FIG. 4, the transceiver unit 820 is configured to receive first indication information from the terminal device. The processing unit 810 is configured to determine precoding based on the first indication information. The processing unit 810 is configured to perform step S430 in FIG. 4. The precoding is similar to the precoding in FIG. 4. Details are not described herein again.

When the communication apparatus 800 is configured to implement the function of the terminal device in the method embodiment shown in FIG. 5, the processing unit 810 is configured to determine a first weight matrix and a first matrix based on a downlink reference signal and first information. The processing unit 810 is configured to perform steps S520 and S530 in FIG. 5. The transceiver unit 820 is configured to send first indication information and third indication information to the network device. The transceiver unit 820 is configured to perform step S540 in FIG. 5. The downlink reference signal, the first information, the first weight matrix, the first indication information, and the third indication information are similar to the downlink reference signal, the first information, the first weight matrix, the first indication information, and the third indication information in FIG. 5. Details are not described herein again.

In some embodiments, when the communication apparatus 800 is configured to implement the function of the terminal device in the method embodiment shown in FIG. 5, the transceiver unit 820 is further configured to receive second indication information from the network device. The transceiver unit 820 is configured to perform step S510 in FIG. 5. The second indication information is similar to the second indication information in FIG. 5. Details are not described herein again.

In some embodiments, when the communication apparatus 800 is configured to implement the function of the terminal device in the method embodiment shown in FIG. 5, the processing unit 810 is further configured to perform step S610 and step S620 in FIG. 6.

When the communication apparatus 800 is configured to implement the function of the network device in the method embodiment shown in FIG. 5, the transceiver unit 820 is configured to receive the first indication information and the third indication information from the terminal device. The processing unit 810 is configured to determine precoding based on the first indication information and the third indication information. The processing unit 810 is configured to perform step S550 in FIG. 5. The precoding is similar to the precoding in FIG. 5. Details are not described herein again.

In some embodiments, when the communication apparatus 800 is configured to implement the function of the network device in the method embodiment shown in FIG. 5, the transceiver unit 820 is further configured to send the second indication information to the terminal device. The second indication information is similar to the second indication information in FIG. 5. Details are not described herein again.

When the communication apparatus 800 is configured to implement the function of the network device in the method embodiment shown in FIG. 7, the processing unit 810 is configured to determine a first weight matrix based on an uplink reference signal and first information. The processing unit 810 is configured to perform step S710 in FIG. 7. The transceiver unit 820 is configured to send first indication information to the terminal device. The transceiver unit 820 is configured to perform step S720 in FIG. 7. The uplink reference signal, the first information, the first weight matrix, and the first indication information are similar to the uplink reference signal, the first information, the first weight matrix, and the first indication information in FIG. 7. Details are not described herein again.

In some embodiments, when the communication apparatus 800 is configured to implement the function of the network device in the method embodiment shown in FIG. 7, the transceiver unit 820 is configured to receive third indication information from the terminal device. The processing unit 810 is configured to determine precoding based on the first weight matrix and the third indication information. The processing unit 810 is configured to perform step S750 in FIG. 7. The third indication information and the precoding are similar to the third indication information and the precoding in FIG. 7. Details are not described herein again.

In some embodiments, when the communication apparatus 800 is configured to implement the function of the network device in the method embodiment shown in FIG. 7, the processing unit 810 is further configured to perform step S610 and step S620 in FIG. 6.

When the communication apparatus 800 is configured to implement the function of the terminal device in the method embodiment shown in FIG. 7, the transceiver unit 820 is configured to receive the first indication information from the network device. The transceiver unit 820 is configured to perform step S720 in FIG. 7. The processing unit 810 is configured to determine a first matrix based on the first indication information. The processing unit 810 is configured to perform step S730 in FIG. 7. The transceiver unit 820 is further configured to send the third indication information to the network device. The transceiver unit 820 is further configured to perform step S740 in FIG. 7. The first indication information, the first matrix, and the third indication information are similar to the first indication information, the first matrix, and the third indication information in FIG. 7. Details are not described herein again.

For more detailed descriptions of the processing unit 810 and the transceiver unit 820, refer to the related descriptions in the method embodiments shown in FIG. 4 to FIG. 7.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the methods shown in FIG. 4 to FIG. 7, the processor 910 is configured to implement a function of the processing unit 810, and the interface circuit 920 is configured to implement a function of the transceiver unit 820.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station (namely, a network device), the module in the base station implements the functions of the base station in the foregoing method embodiment. The module in the base station receives information from another module (for example, a radio frequency module or an antenna) in the base station, where the information is sent by a terminal to the base station. Alternatively the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (central processing unit, CPU), or may be another general purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or a terminal as discrete components.

An embodiment of this application further provides a communication system. The communication system includes the network device and the terminal device in embodiments of this application.

An embodiment of this application further provides a computer-readable storage medium. The computer-readable storage medium may be any usable medium that can be stored by a computing device, or a data storage device, for example, a data center including one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like. The computer-readable storage medium includes instructions or program code. When the instructions or the program code in the computer-readable storage medium is executed on a computing device, the computing device is caused to perform the method provided above.

An embodiment of this application further provides a computer program product. The computer program product may be software or a program product that includes instructions and that can be run on a computing device or is stored in any usable medium. When the instructions are run on the computing device, the computing device is caused to perform the method provided above, or the computing device is caused to implement functions of the apparatus provided above.

An embodiment of this application further provides a chip. The chip includes at least one processor. When program instructions is executed by the at least one processor, the at least one processor is caused to perform the method provided above.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and can be mutually referenced, and technical features in different embodiments can be combined to form new embodiments based on their inherent logical relationship.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A precoding determining method, comprising:
determining a first weight matrix based on a downlink reference signal and first information, wherein the downlink reference signal is used to obtain channel information of a downlink channel, the downlink channel comprises channels corresponding to m₁ port groups, the first information indicates a quantity m₂ of antenna ports comprised in each of the m₁ port groups, and/or the first information indicates a quantity n₁ of antenna ports in a first dimension and a quantity n₂ of antenna ports in a second dimension in each of the m₁ port groups, the first weight matrix corresponds to one of the m₁ port groups, the first weight matrix is used to determine precoding corresponding to m₁*m₂ antenna ports, m₂ is determined based on n₁ and n₂, m₁ and m₂ are integers greater than 1, and n₁ and n₂ are positive integers; and
sending first indication information, wherein the first indication information indicates the first weight matrix.

2. The method according to claim 1, wherein before the determining the first weight matrix based on the downlink reference signal and the first information, the method further comprises:
receiving second indication information, wherein the second indication information indicates the first information.

3. The method according to claim 2, wherein the second indication information comprises the first information or the second indication information indicates an index of the first information in a first set, the first set comprises at least one value or at least one value combination, each of the at least one value combination comprises two values, and the quantity m₂ of antenna ports that are comprised in each port group and that is indicated by the first information belongs to the at least one value, and/or the quantity of antenna ports in the first dimension and the quantity of antenna ports in the second dimension in each antenna port that are indicated by the first information belong to the at least one value combination.

4. The method according to claim 3, wherein when a quantity N₁ of antenna ports in the first dimension in the m₁*m₂ antenna ports varies, and/or a quantity N₂ of antenna ports in the second dimension in the m₁*m₂ antenna ports varies, one or more values comprised in a corresponding first set are different from one or more values comprised in a corresponding first set; or
when a quantity N₁ of antenna ports in the first dimension in the m₁*m₂ antenna ports varies, and/or a quantity N₂ of antenna ports in the second dimension in the m₁*m₂ antenna ports varies, each value comprised in a corresponding first set is the same as each value comprised in a corresponding first set, wherein ${N}_{1} {* N}_{2} = {m}_{1} {* n}_{1} {* n}_{2} .$

5. The method according to claim 3 or 4, wherein the first set comprises the at least one value combination, and a product of two values in a first value combination in the at least one value combination is the quantity m₂ of antenna ports comprised in each port group.

6. The method according to any one of claims 2 to 5, wherein the second indication information further indicates second information, and the second information indicates the quantity N₁ of antenna ports in the first dimension and the quantity N₂ of antenna ports in the second dimension in the m₁*m₂ antenna ports.

7. The method according to any one of claims 1 to 6, wherein the method further comprises:
determining a first matrix based on the downlink reference signal and the first information, wherein the first matrix indicates precoding corresponding to the m₁ port groups; and
sending third indication information, wherein the third indication information indicates the first matrix.

8. The method according to claim 7, wherein the precoding corresponding to the m₁*m₂ antenna ports is determined based on a second weight matrix and the first matrix, and the second weight matrix is determined based on m₁ first weight matrices.

9. The method according to claim 8, wherein each of the m₁ first weight matrices is a diagonal block element of the second weight matrix, and a value of an element in the second weight matrix other than the diagonal block element is 0.

10. The method according to any one of claims 1 to 9, wherein the first indication information indicates an amplitude and a phase of each element in the first weight matrix; or
the first weight matrix is determined by performing linear weighting on a first orthogonal vector group, the first indication information indicates a weighting coefficient and an index of the first orthogonal vector group, and the weighting coefficient indicates an amplitude and a phase of an element in the first weight matrix.

11. A precoding determining method, comprising:
receiving first indication information, wherein the first indication information indicates a first weight matrix, the first weight matrix is used to determine precoding corresponding to m₁*m₂ antenna ports, the first weight matrix corresponds to one port group of a downlink channel, the downlink channel comprises channels corresponding to m₁ port groups, a quantity of antenna ports comprised in each of the m₁ port groups is determined based on first information, the first information indicates a quantity m₂ of antenna ports comprised in each of the m₁ port groups, and/or the first information indicates a quantity n₁ of antenna ports in a first dimension and a quantity n₂ of antenna ports in a second dimension in each of the m₁ port groups, m₂ is determined based on n₁ and n₂, m₁ and m₂ are integers greater than 1, and n₁ and n₂ are positive integers; and
determining, based on the first indication information, the precoding corresponding to the m₁*m₂ antenna ports.

12. The method according to claim 11, wherein before the receiving the first indication information, the method further comprises:
sending second indication information, wherein the second indication information indicates the first information.

13. The method according to claim 12, wherein the second indication information comprises the first information or the second indication information indicates an index of the first information in a first set, the first set comprises at least one value or at least one value combination, each of the at least one value combination comprises two values, and the total quantity m₂ of antenna ports that are comprised in each port group and that is indicated by the first information belongs to the at least one value, and/or the quantity of antenna ports in the first dimension and the quantity of antenna ports in the second dimension in each antenna port that are indicated by the first information belong to the at least one value combination.

14. The method according to claim 13, wherein when a quantity N₁ of antenna ports in the first dimension in the m₁*m₂ antenna ports varies, and/or a quantity N₂ of antenna ports in the second dimension in the m₁*m₂ antenna ports varies, one or more values comprised in a corresponding first set are different from one or more values comprised in a corresponding first set; or
when a quantity N₁ of antenna ports in the first dimension in the m₁*m₂ antenna ports varies, and/or a quantity N₂ of antenna ports in the second dimension in the m₁*m₂ antenna ports varies, each value comprised in a corresponding first set is the same as each value comprised in a corresponding first set, wherein ${N}_{1} * {N}_{2} = {m}_{1} * {n}_{1} * {n}_{2} .$

15. The method according to claim 13 or 14, wherein the first set comprises the at least one value combination, and a product of two values in a first value combination in the at least one value combination is the quantity m₂ of antenna ports comprised in each port group.

16. The method according to any one of claims 12 to 15, wherein the second indication information further indicates second information, and the second information indicates the quantity N₁ of antenna ports in the first dimension and the quantity N₂ of antenna ports in the second dimension in the m₁*m₂ antenna ports.

17. The method according to any one of claims 11 to 16, wherein the method further comprises:
receiving third indication information, wherein the third indication information indicates a first matrix, and the first matrix indicates precoding corresponding to the m₁ port groups.

18. The method according to claim 17, wherein the determining, based on the first indication information, the precoding corresponding to the m₁*m₂ antenna ports comprises:
determining a second weight matrix based on m₁ first weight matrices; and
determining, based on the second weight matrix and the first matrix, the precoding corresponding to the m₁*m₂ antenna ports.

19. The method according to claim 18, wherein each of the m₁ first weight matrices is a diagonal block element of the second weight matrix, and a value of an element in the second weight matrix other than the diagonal block element is 0.

20. The method according to any one of claims 11 to 19, wherein the first indication information indicates an amplitude and a phase of each element in the first weight matrix; or
the first weight matrix is determined by performing linear weighting on a first orthogonal vector group, the first indication information indicates a weighting coefficient and an index of the first orthogonal vector group, and the weighting coefficient indicates an amplitude and a phase of an element in the first weight matrix.

21. A communication apparatus, comprising a module configured to perform the method according to any one of claims 1 to 20.

22. A communication apparatus, wherein the communication apparatus comprises at least one processor and a communication interface, the communication interface is used by the communication apparatus to exchange information with another communication apparatus, and when program instructions are executed by the at least one processor, the communication apparatus is caused to perform the method according to any one of claims 1 to 20.

23. A computer-readable storage medium, wherein the computer-readable storage medium stores program code to be executed by a device, and when the program code is executed, the method according to any one of claims 1 to 20 is performed.

24. A chip, wherein the chip comprises at least one processor, and when program instructions are executed by the at least one processor, the method according to any one of claims 1 to 20 is performed.

25. A computer program product, comprising program instructions, wherein when the computer program product is run on a computer, the method according to any one of claims 1 to 20 is performed.
